(19) Europäisches Patentamt
European Patent Office
Office européen des brevets

(11) **EP 3 594 840 A1**

(12) **EUROPEAN PATENT APPLICATION**

(43) Date of publication:
**15.01.2020 Bulletin 2020/03**

(51) Int Cl.:
**G06F 21/44** (2013.01)  **G06F 21/73** (2013.01)
**G11C 13/00** (2006.01)  **G11C 16/34** (2006.01)

(21) Application number: **18305944.3**

(22) Date of filing: **12.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GEMALTO SA**
**92190 Meudon (FR)**

(72) Inventors:
• **LEPAVEC, Emmanuel**
**92190 Meudon (FR)**

• **BOUVERON, Dominique**
**92190 Meudon (FR)**
• **MINETTE DE SAINT-MARTIN, Xavier**
**92190 Meudon (FR)**
• **VIENNE, Nicolas**
**92190 Meudon (FR)**
• **PHAN, Guillaume Chi-Dan**
**92190 Meudon (FR)**

(74) Representative: **Cassagne, Philippe M.J.**
**Thales Dis France SA**
**Intellectual Property Department**
**6, rue de la Verrerie**
**92190 Meudon (FR)**

(54) **A METHOD AND AN APPARATUS FOR DETERMINING A DIGITAL PRINT REPRESENTATIVE OF A STATE OF AN EXTERNAL NON-VOLATILE MEMORY**

(57) The invention relates to an embedded system (110) comprising an external non-volatile memory (100) composed of a plurality of memory cells and a processing unit (101) comprising a secure memory (103) containing a memorized value $MEM\_ID$ attributed to said processing unit (101), the processing unit (101) being configured to determine a digital print $DP\_calc$ identifying a state of the external non-volatile memory (100) by: identifying a set of at least one memory cell of the external non-volatile memory (100) by applying a function F1 using the memorized value $MEM\_ID$ as an input; providing at least one wear level $WL\_n$ associated to the one or several memory cells belonging to said set of at least one memory cell; determining the digital print $DP\_calc$ by applying a function F3 to the at least one wear level $WL\_n$.

Fig. 1

EP 3 594 840 A1

**Description**

TECHNICAL FIELD

The present invention relates to a method and an apparatus for determining digital print representative of a state of an external non-volatile memory. It is applicable to the technical domain of securing embedded systems.

BACKGROUND OF THE INVENTION

According to the Recommendation ITU-T Y.2060 provided by the International Telecommunication institute, the Internet of things (IoT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, IoT is generally applied in fields such as security surveillance, automatic vending machines, public traffic systems, vehicle monitoring and management, industry process automatization, motor machineries, city informationalization.

In this description, the expression IoT device refers to a piece of equipment with communication capabilities and optionally capacity of data capture, sensing, data storage, sensing and/or data processing. An IoT device comprises for example a wireless communication module also called Machine Type Communication (MTC) module allowing transmission of data from one IoT device to another or exchange of data between machines through UMTS/HSDPA, CDMA/EVDO, LTE, 5G, LoRa or other networks. It also comprises a computing system composed for example of a processing unit and an associated non-volatile memories (NVM).

The processing unit is for example a microprocessor, a system-on-chip (SoC) processing unit or a secure element.

The non-volatile memory (NVM) associated to the processing unit can be of different types. For example, one can find today non-volatile memories available on the market which can be erased and reprogrammed. Two common examples of existing non-volatile random access memories (NVRAM) are electrically erasable programmable read-only memory (EEPROM) and Flash memory technologies which are both widely used in today's systems.

Embedded systems are examples of computing systems for which specific constraints such as real time processing has to be taken into account. Embedded systems are widely used for implementing the Internet-of Things (IoT) ecosystem and billions of devices are expected to be deployed on the field. Systems architects and designers need to address several security issues.

In particular, as the IoT devices and their embedded systems are deployed on the field, these can be easily accessible for malevolent marauders which are skilled to implement security attacks such as rollback attack. A rollback attack aims at modifying a computing system for it to run an older, insecure and/or modified software version rather than the genuine version which can make the computing system more vulnerable to potential attacks.

Another type of attack to be considered during the design phase of an embedded system is the so-called replay attack which reuses data which is for example stored in the memory of the embedded system. Both rollback and replay attacks may therefore be conducted by accessing and modifying the content of the non-volatile memory. When the memory is implemented externally to the processing means of the embedded systems which may be secured, data can be modified for running some of the aforementioned attacks. This is the case for example when a secure enclave cooperates with an external memory.

In this description, the expression external memory refers to a memory implemented by the embedded system, but which is not internal to the processing means. It can be for example connected to the processing unit using a data bus. The external memory can be soldered together with the processing unit on a printed circuit or accessing through a memory card reader in case the memory is removable.

In addition, the expression secure enclave refers to a secure area that is adapted to process data and protect their integrity and confidentiality and comprising a set of at least one hardware and/or software components. This secure enclave can be implemented for example into a processor in the form of a Trusted Execution Environment (TEE) or as a secure element embedded in a system or integrated in a System-on-Chip (SoC).

One important weakness of an embedded system having processing means cooperating with an external memory is that a fraudulent user may replace the genuine external memory implemented in the embedded system by its own external memory with its own data for conducting attacks such as rollback or replay attacks.

State-of-the-art mechanisms can be used against the aforementioned attacks. For example, well known anti-replay mechanisms relying on the use of a one-time programmable (OTP) memory can be used advantageously. An example is provided in the publication of the international patent application WO2011073435A1. A drawback of this type of countermeasure is the large amount of one-time programmable memory required for being efficient on a long term perspective. Other existing alternatives can also be considered, such as using an internal flash memory or a secure external flash memory but these solutions are expensive and not flexible.

Therefore, there is a need for a solution allowing to secure the use of a memory of an embedded system which minimizes the needs for additional one-time programmable memory while allowing a flexible implementation of the embedded system.

## SUMMARY OF THE INVENTION

The invention relates to an embedded system comprising an external non-volatile memory composed of a plurality of memory cells and a processing unit comprising a secure memory containing a memorized value $MEM\_ID$ attributed to said processing unit, the processing unit being configured to determine a digital print $DP\_calc$ identifying a state of the external non-volatile memory by:

- identifying a set of at least one memory cell of the external non-volatile memory by applying a function $F1$ using the memorized value $MEM\_ID$ as an input;
- providing at least one wear level $WL\_n$ associated to the one or several memory cells belonging to said set of at least one memory cell;
- determining the digital print $DP\_calc$ by applying a function $F3$ to the at least one wear level $WL\_n$.

According to an embodiment, the digital print $DP\_calc$ is used for authenticating the external non-volatile memory by the processing unit by comparing said digital print $DP\_calc$ with a reference digital print $DP\_ref$ memorized by the processing unit, the reference digital print $DP\_ref$ being previously calculated using the same mechanism applied to the genuine external memory, the external non-volatile memory being authenticated if the digital print $DP\_calc$ matches with the reference digital print $DP\_ref.$

According to an embodiment, the one or several memory cells belonging to the set of memory cells identified using the memorized value $MEM\_ID$ is preserved from being used for storing data.

According to an embodiment, the reference digital print $DP\_ref$ is memorized in the processing unit and determined by during the manufacturing of the embedded system when it is associated to the external memory.

According to an embodiment, the reference digital print $DP\_ref$ can also be re-calculated by the processing unit periodically or upon request.

According to an embodiment, the set of memory cells identified using the memorized value $MEM\_ID$ is artificially worn out by applying a plurality of programming and erasure (P/E) cycles in order to update the reference digital print $DP\_ref$, said reference digital print $DP\_ref$ being updated by using the newly wear levels.

According to an embodiment, the first function $F1$ is injective.

The invention also relates to a method for determining a digital print $DP\_calc$ identifying the state of an external non-volatile memory composed of a plurality of memory cells by a processing unit comprising a secure memory containing a memorized value $MEM\_ID$ attributed to said processing unit, the method being applied by the processing unit and comprising the steps of:

- identifying a set of at least one memory cell of the external non-volatile memory by applying a function $F1$ using the memorized value $MEM\_ID$ as an input;
- providing at least one wear level $WL\_n$ associated to the one or several memory cells belonging to said set of at least one memory cell;
- determining the digital print $DP\_calc$ by applying a function $F3$ to the at least one wear level $WL\_n.$

According to an embodiment, the method comprises the step of comparing the digital print $DP\_calc$ with a reference digital print $DP\_ref$ memorized by the processing unit, the reference digital print $DP\_ref$ being previously calculated using the same mechanism applied to the genuine external memory, the external non-volatile memory being authenticated if the digital print $DP\_calc$ matches with the reference digital print $DP\_ref.$

According to an embodiment, the function F1 is injective.

The invention also relates to a processing unit comprising a secure memory containing a memorized value $MEM\_ID$ attributed to said processing unit, the processing unit being configured to be associated with an external non-volatile memory and to carry out the steps of the above method.

According to an embodiment, the secure memory is a one-time programmable (OTP) memory.

According to an embodiment, the memorized value $MEM\_ID$ is a unique identifier of said processing unit.

According to an embodiment, the memorized value $MEM\_ID$ is a random number generated and memorized in the processing unit during its manufacturing.

According to an embodiment, the processing unit comprises a baseband communication chip, the memorized value $MEM\_ID$ being an International Mobile Equipment Identity (IMEI).

## BRIEF DESCRIPTION OF THE DRAWINGS

Additional features and advantages of the invention will be more clearly understandable after reading a detailed description of several embodiments of the invention, given as an indicative and non-limitative example, in conjunction with the following drawings:

- Figure 1 is an example of architecture of an embedded system implementing a mechanism to generate a digital print representative of a state of an external non-volatile memory;
- Figure 2 illustrates the evolution of the wear level of a memory cell;
- Figure 3 provides an example flow chart with several steps designed to authenticate an external memory;
- Figure 4 illustrates schematically how a value memorized in a processing unit can be used for determining a list and possibly an order of the listed memory cells;

- Figure 5 provides an example of process leading to a wear value using the measurement performed by a measurement controller associated to the external memory.

DETAILED DESCRIPTION

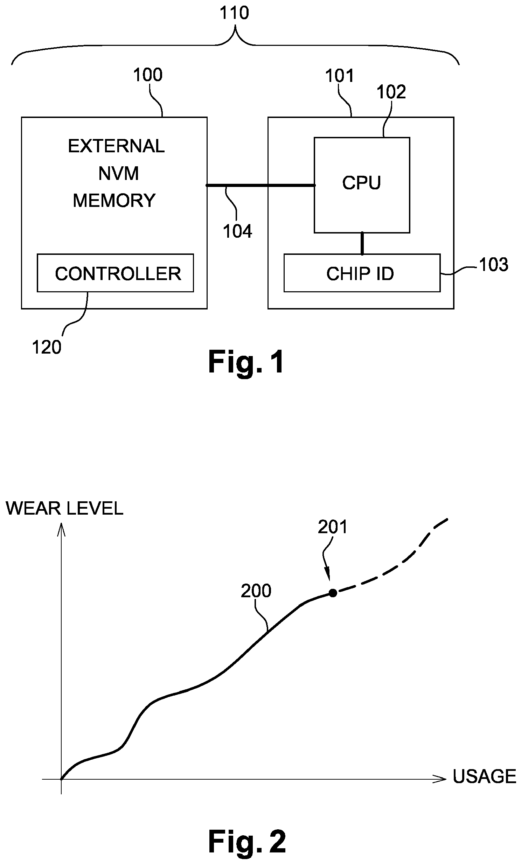

**Figure 1** is an example of architecture of an embedded system implementing a mechanism to generate a digital print representative of a state of an external non-volatile memory.

The embedded system 110 is composed of a processing unit 101 and an external persistent memory 100. The processing unit 101 is for example a secure enclave or a system on chip (SoC) comprising a central processing unit 102 and a one-time programmable memory (OTP) 103 adapted to memorize an identifier. According to a preferred embodiment, this identifier is a unique identifier attributed to the processing unit. As the processing unit is integrated in the embedded system, it can be used for identifying the system. For example, an IoT device, can be identified using this identifier. This unique identifier can be generated and provided by the manufacturer of the processing unit or by the original equipment manufacturer (OEM) embedding the device.

The external memory 100 is also implemented in the embedded system but is not integrated in the processing unit 101. The external memory 100 and the processing unit 101 are able to communicate using an hardware interface 104, for example a serial or parallel data bus.

According to an embodiment, the external persistent memory comprises a measurement controller 120 allowing the estimate the wear level of the cells composing the external persistent memory.

The described mechanism aims at determining a digital print identifying a state of the external non-volatile memory (100). For that purpose, one or several measurements of the memory wear level of a predefined set of memory cells are used.

This mechanism can also be used by the processing unit to authenticate the external memory in order to detect if this is the genuine one which is in use or another external memory replacing the genuine enabling a fraudster to conduct an attack.

A memory cell is a building block of a memory system. Binary data is stored by applying erase/write cycles to the memory cells composing the memory system.

**Figure 2** illustrates the evolution of the wear level of a memory cell.

The wear level of a memory cell is a strictly increasing function 200 of its usage. A memory cell can only wear out, it cannot regenerate. As such, it can be considered as a monotonic, irreversible, function of its usage. In the example of Figure 2, the current memory wear level is indicated 201 and it is illustrated that it can only increase over time.

A memory cell wears out as a function of its usage. The performance of memory cells deteriorates as a function of the number of the programming and erasure cycles (P/E). More precisely, these cycles cause memory cells to gain some extra charge and the accumulation of this charge over time leads to wear-out of the memory cells. Measurements of the wear level are used in existing technologies for implementing wear-leveling mechanism aiming at prolonging the longevity of the memory system, such as the one described in the publication of the US patent application US20160335178A1 entitled "Systems And Methods For Utilizing Wear Leveling Windows with Non-Volatile Memory Systems".

In case of a Flash memory, programming and erasure (P/E) cycling causes damage to the tunnel oxide of the memory cells in the form of charge trapping in the oxide and interface states. This physical phenomenon is detailed in the article of P. Olivo, B. Ricco, and E. Sangiorgi entitled "High Field Induced Voltage Dependent Oxide Charge", Applied Physics Letter, vol. 48, pp. 1135-1137, 1986. The memory cell wear-out caused by P/E cycling is proportional to the programmed threshold voltage level. Therefore, a way to estimate the wear level of a memory cell is to estimate this programmed threshold voltage or its shift over time. For that purpose, a threshold voltage shift measurement controller measuring a threshold voltage of a charge loss measurement for each cell in each memory block of a flash memory device can be implemented in order to determine a wear level of the memory block according to the measured threshold voltage. An example of such technique is described in the publication US20090168524A1 of the US patent application entitled "Wear level estimation in analogue memory cells". Another technology to estimate the wear level of a memory cell us to use its timing and analogue characteristics. For example, the number of retries needed for erasing a given memory cell in order to reach a predefined charge level can be used as an indicator of the wear level.

It is interesting to note that temperature variations can slightly influence the wear level measurement of a memory cell. Therefore, according to an embodiment, a temperature sensor can be implemented in the embedded system and the measured temperature value can be used for improving the accuracy of the wear level measurements.

One important aspect of the invention is that the wear level of a predetermined set of memory cells is used to authenticate the external memory. The aim is to generate a footprint that is unique for a given memory when used in conjunction with a given processing unit. For that purpose, a set of memory cells belonging to the external memory is determined. The selection process implemented for determining the one or several memory cells composing this set is dependent of the processing unit. In other words, the selected set of memory cells is such that it allows to bound the processing unit with the external memory, providing the property of anti-cloning. According to an example, the selection of the set of cell can be derived from a value *MEM_ID* memorized securely in the processing unit. It can be for example a unique identifier or a random seed provisioned in the processing unit at the manufacturing stage. This value can for example be memorized in a one-time-programmable memory which is implemented in the processing unit.

According to an embodiment, if the processing unit refers to a baseband communication chip, the memorized value *MEM_ID* can be the International Mobile Equipment Identity (IMEI). As the IMEI is generally written in an one-time programmable memory, the modification needed to implement the invention is advantageously minimized.

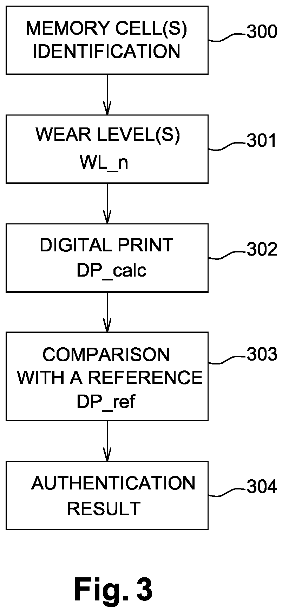

**Figure 3** provides an example flow chart with several steps designed to authenticate an external memory.

The first step 300 is designed to identify the set of one or several memory cells that will allow the bounding of a given processing unit with the external memory. For that purpose, a first function *F*1 can implemented by the processing device to determine the memory cells belonging to the aforementioned set from a predetermined value memorized in the processing unit.

According to an example, the first function *F*1 can be chosen as a trivial identity function. The memorized value *MEM_ID* corresponds for example to the concatenation of several memory cell addresses.

According to another example, the first function *F*1 is a pseudo random number generator (PRNG) using the memorized value *MEM_ID* as a seed.

A given memory cell can be identified by a physical raw address. The memory cell addresses provided as an out after applying the first function *F*1 using the memorized value *MEM_ID* as an input are noted in the sequel $X\_1, X\_2, ...,X\_N$. The person skilled in that art will understand these addresses can be those of a memory page, a memory block, a sector, a bank, or any addressable memory area depending of the memory technology in use, an addressable memory area corresponding to a memory cell in the context of this invention.

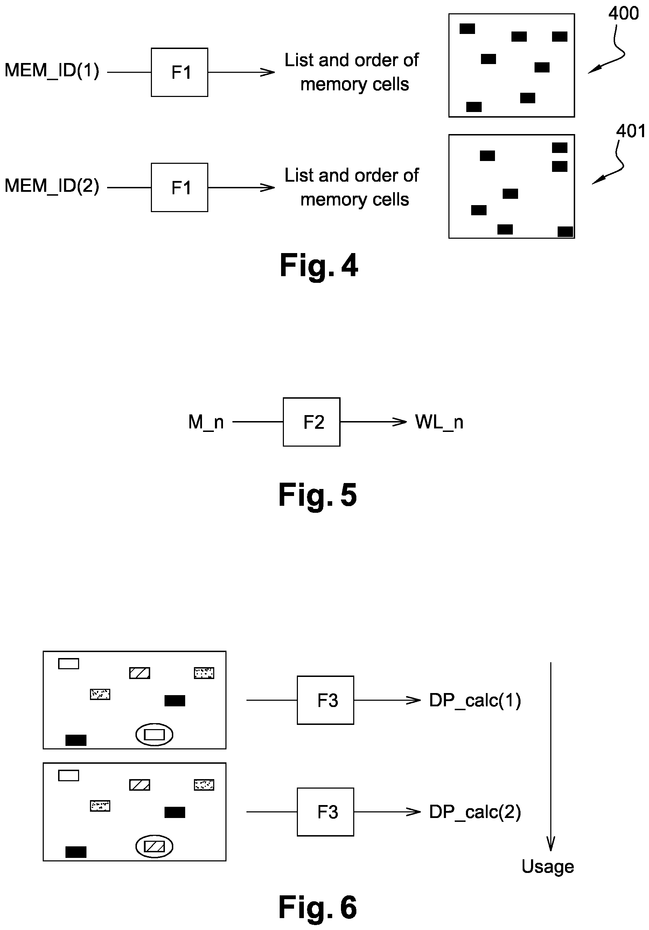

**Figure 4** illustrates schematically how a value memorized in a processing unit can be used for determining a list and possibly an order of the listed memory cells.

According to an embodiment, the function *F*1 is injective with the advantage of having a unique set of memory cells associated to each of the possible values *MEM_ID* memorized in the processing unit. In that case, applying *F*1 to two different chip identifiers *MEM_ID*(1) and *MEM_ID*(2) will lead to two different sets and orders 400, 401 of memory cells.

The memorized value *MEM_ID* is for example an identifier of a chip implementing the processing unit.

The one or several outputs $X\_1, X\_2, ..., X\_N$ obtained by applying function *F*1 using the memorized value as an input therefore correspond to a set of physical addresses corresponding to the set of memory cells to be involved in the process of generating a digital print.

$$(X\_1, X\_2, ... , X\_N ) = F1(MEM\_ID)$$

Then, a second steps 301 aims at providing the wear level of the memory cells identified at step 300. For that purpose, a threshold voltage shift measurement controller can be used. It is for example implemented in the external memory and measuring a threshold voltage of a charge loss measurement *M_n* for each of the n-th cells of the selected set of cells with $n \in [1, N]$.

**Figure 5** provides an example of process leading to a wear value using the measurement performed by a measurement controller associated to the external memory.

A value *WL_n* can be provided for each of the memory cells belonging to the set identified at step 300 by applying a second function *F*2 to the measurement obtained from the controller:

$$WL\_n = F2(M\_n)$$

Alternatively, the measurements *M_n* are taken directly as the wear levels, in that case, one have:

$$WL\_n = M\_n$$

**Figure 6** illustrates the process of determining a digital print using the wear levels of a selected set of memory cells.

Once the wear levels of the identified memory cells are collected, a step 302 is applied with the aim of determining a digital print DP_calc derived from the collected wear levels. A third function *F*3 can be used for that purpose:

$$DP\_calc = F3(WL\_1, WL\_2, ... , WL\_N)$$

Function *F*3 is chosen such that different combinations of wear level values lead to different digital print values.

According to an embodiment, the function *F*3 is a hash function such as SHA-256.

According to another embodiment, the function *F*3 corresponds to a Cyclic Redundancy Code (CRC) function.

According to another embodiment, the function *F*3 is chosen for generating a digital signature. Function corresponds for example to a Digital Signature Algorithm (DSA).

Then, a step 303 compares the digital print

DP_calc with a reference digital print DP_ref and if these are identicals, the memory is authenticated.

On the contrary, if the digital print DP_calc differs from the reference digital print DP_ref, a critical event is detected and appropriate actions can be applied by the processing unit. A non-limitative list of examples of so-called appropriate actions is: log event, burn a fuse of a one-time- programmable memory (OTP) indicating a security critical error event, self-destruct by wiping a critical memory area upon security error detection, system mute, forcing the system to reboot, notification of a suspected attack.

According to an embodiment, the reference digital print DP_ref is determined by the embedded system at the manufacturing stage. This value can also be updated during the life-time of the embedded system.

As the wear level of a memory cell increases over time depending of its use, there are several options that can be implemented for making sure that the reference digital print DP_ref is up to date for enabling the authentication of a genuine external memory.

According to an embodiment, the one or several memory cells belonging to the set of memory cells associated to the memorized chip identifier is preserved from being used for storing data. This can be carried out by the memory management of the software implemented by the processing unit. Therefore, these are not subject to programming and erasure (P/E) cycles and consequently their wear level remain steady over time.

According to another embodiment, the reference digital print DP_ref can also be re-calculated by the processing unit periodically or upon request. This is particularly useful if the memory cells belonging to the set of memory cells associated to the memorized chip identifier are used for storing data and not subject to subject to programming and erasure (P/E) cycles.

According to another embodiment, one or several memory cells belonging to the set of memory cells associated to the memorized chip identifier can be artificially worn out by applying a plurality of programming and erasure (P/E) cycles in order to update the reference digital print DP_ref. The skilled person will understand that the reference digital print DP_ref has to be recalculated and memorized securely by the chip implementing the processing unit.

For calculating the reference digital print DP_ref, the same method is used than the one used for calculating DP_calc. The reference digital print DP_ref is calculated or re-calculated preferably at a time where the measured external memory is trusted as the genuine one. For example, the reference digital print DP_ref can be initialized during the manufacturing of the embedded system, when the external memory is associated to the processing unit.

**Claims**

1. An embedded system (110) comprising an external non-volatile memory (100) composed of a plurality of memory cells and a processing unit (101) comprising a secure memory (103) containing a memorized value MEM_ID attributed to said processing unit (101), the processing unit (101) being configured to determine a digital print DP_calc identifying a state of the external non-volatile memory (100) by:

   - identifying a set of at least one memory cell of the external non-volatile memory (100) by applying a function F1 using the memorized value MEM_ID as an input;
   - providing at least one wear level WL_n associated to the one or several memory cells belonging to said set of at least one memory cell;
   - determining the digital print DP_calc by applying a function F3 to the at least one wear level WL_n.

2. An embedded system (110) according to claim 1, wherein the digital print DP_calc is used for authenticating the external non-volatile memory by the processing unit (101) by comparing said digital print DP_calc with a reference digital print DP_ref memorized by the processing unit (101), the reference digital print DP_ref being previously calculated using the same mechanism applied to the genuine external memory, the external non-volatile memory (100) being authenticated if the digital print DP_calc matches with the reference digital print DP_ref.

3. An embedded system (110) according to any of the preceding claims, wherein the one or several memory cells belonging to the set of memory cells identified using the memorized value MEM_ID is preserved from being used for storing data.

4. An embedded system (110) according to any of claims 2 or 3, wherein the reference digital print DP_ref is memorized in the processing unit and determined by during the manufacturing of the embedded system when it is associated to the external memory.

5. An embedded system (110) according to any of claims 2 to 4, wherein the reference digital print DP_ref can also be re-calculated by the processing unit periodically or upon request.

6. An embedded system (110) according to any of claims 2 to 5, wherein the set of memory cells identified using the memorized value MEM_ID is artificially worn out by applying a plurality of programming and erasure (P/E) cycles in order to update the reference digital print DP_ref, said reference digital print *DP_ref* being updated by using the newly wear levels.

7. An embedded system (110) according to any of the preceding claims, wherein the first function *F*1 is injective.

8. A method for determining a digital print *DP_calc* identifying the state of an external non-volatile memory (100) composed of a plurality of memory cells by a processing unit (101) comprising a secure memory (103) containing a memorized value *MEM_ID* attributed to said processing unit (101), the method being applied by the processing unit (101) and comprising the steps of:

   - identifying (300) a set of at least one memory cell of the external non-volatile memory (100) by applying a function *F*1 using the memorized value *MEM_ID* as an input;
   - providing (301) at least one wear level *WL_n* associated to the one or several memory cells belonging to said set of at least one memory cell;
   - determining (302) the digital print *DP_calc* by applying a function F3 to the at least one wear level *WL_n.*

9. Method according to claim 8, comprising the step of comparing (303) the digital print *DP_calc* with a reference digital print *DP_ref* memorized by the processing unit, the reference digital print *DP_ref* being previously calculated using the same mechanism applied to the genuine external memory, the external non-volatile memory (100) being authenticated (304) if the digital print *DP_calc* matches with the reference digital print *DP_ref.*

10. A method according to any of claims 8 or 9, wherein the function F1 is injective.

11. A processing unit (101) comprising a secure memory (103) containing a memorized value *MEM_ID* attributed to said processing unit (101), the processing unit (101) being configured to be associated with an external non-volatile memory (100) and to carry out the steps of the method according to any of claims 8 to 10.

12. A processing unit according to claim 11, wherein the secure memory is a one-time programmable (OTP) memory.

13. A processing unit according to any of claims 11 to 12, wherein the memorized value *MEM_ID* is a unique identifier of said processing unit.

14. A processing unit according to any of claims 11 to 13, wherein the memorized value *MEM_ID* is a random number generated and memorized in the processing unit during its manufacturing.

15. A processing unit according to any of claims 12 comprising a baseband communication chip, the memorized value *MEM_ID* being an International Mobile Equipment Identity (IMEI).

**Fig. 1**

**Fig. 2**

```
┌─────────────────────┐
│   MEMORY CELL(S)    │──300
│   IDENTIFICATION    │
└─────────────────────┘
          │
          ▼
┌─────────────────────┐
│   WEAR LEVEL(S)     │──301
│        WL_n         │
└─────────────────────┘
          │
          ▼
┌─────────────────────┐
│   DIGITAL PRINT     │──302
│       DP_calc       │
└─────────────────────┘
          │
          ▼
┌─────────────────────┐
│    COMPARISON       │──303
│  WITH A REFERENCE   │
│       DP_ref        │
└─────────────────────┘
          │
          ▼
┌─────────────────────┐
│   AUTHENTICATION    │──304
│      RESULT         │
└─────────────────────┘
```

**Fig. 3**

MEM_ID(1) —— | F1 | ——→ List and order of memory cells

400

MEM_ID(2) —— | F1 | ——→ List and order of memory cells

401

# Fig. 4

M_n —— | F2 | ——→ WL_n

# Fig. 5

| F3 | ——→ DP_calc(1)

| F3 | ——→ DP_calc(2)

Usage

# Fig. 6

Europäisches
Patentamt

European
Patent Office

Office européen
des brevets

# EUROPEAN SEARCH REPORT

Application Number

EP 18 30 5944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/117633 A1 (MATSUKAWA SHINICHI [JP] ET AL) 9 May 2013 (2013-05-09)<br>* figures 2,4,6,19 *<br>* paragraph [0028] *<br>* paragraph [0061] - paragraph [0072] *<br>* paragraph [0184] *<br>* paragraph [0201] *<br>----- | 1-15 | INV.<br>G06F21/44<br>G06F21/73<br>G11C13/00<br>G11C16/34 |
| A | US 2014/372671 A1 (TANAMOTO TETSUFUMI [JP] ET AL) 18 December 2014 (2014-12-18)<br>* figures 1a,1b,2,6 *<br>* paragraph [0002] - paragraph [0006] *<br>* paragraph [0020] - paragraph [0040] *<br>----- | 1-15 | |

TECHNICAL FIELDS
SEARCHED      (IPC)

G06F
G11C

The present search report has been drawn up for all claims

| Place of search | Date of completion of the search | Examiner |
|---|---|---|
| Munich | 17 October 2018 | Pohl, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 30 5944

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2018

| Patent document cited in search report | | Publication date | Patent family member(s) | | Publication date |
|---|---|---|---|---|---|
| US 2013117633 | A1 | 09-05-2013 | JP<br>TW<br>US<br>WO | 2012014416 A<br>201203092 A<br>2013117633 A1<br>2012002009 A1 | 19-01-2012<br>16-01-2012<br>09-05-2013<br>05-01-2012 |
| US 2014372671 | A1 | 18-12-2014 | JP<br>JP<br>US | 6129654 B2<br>2015001761 A<br>2014372671 A1 | 17-05-2017<br>05-01-2015<br>18-12-2014 |

EPO FORM P0459

For more details about this annex : see Official Journal of the European Patent Office, No. 12/82

**EP 3 594 840 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011073435 A1
- US 20160335178 A1
- US 20090168524 A1

**Non-patent literature cited in the description**

- **P. OLIVO ; B. RICCO ; E. SANGIORGI.** High Field Induced Voltage Dependent Oxide Charge. *Applied Physics Letter,* 1986, vol. 48, 1135-1137